(19) Europäisches Patentamt
European Patent Office
Office européen des brevets

(11) **EP 2 146 235 A1**

(12) **EUROPEAN PATENT APPLICATION**

(43) Date of publication:
**20.01.2010 Bulletin 2010/03**

(51) Int Cl.:
***G02B 21/00*** *(2006.01)*

(21) Application number: **09007622.5**

(22) Date of filing: **09.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **17.07.2008 JP 2008186205**

(71) Applicant: **Olympus Corporation**
**Shibuya-ku**
**Tokyo 151-0072 (JP)**

(72) Inventor: **Hayashi, Shinichi**
**Tokyo 151-0072 (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **Laser scanning microscope**

(57) A laser scanning microscope comprises: an objective lens (2) for observing a specimen (1); a focal plane scan lens(3) placed on the opposite side of the objective lens (2) from the specimen(1) and which generates an intermediate image; a mirror (4) placed near to the position of the intermediate image of the focal plane scan lens(3); a scan unit(5) scanning the mirror (4) in the optical axis direction; and a pupil projection optical system (8) which projects the pupil (6) of the objective lens (2) onto the pupil(7) of the focal plane scan lens(3) and of which the pupil projection magnification ratio is variable.

F I G. 3

EP 2 146 235 A1

**Description**

**Background of the Invention**

**Field of the Invention**

The present invention relates to a technical field related to a laser scanning microscope.

**Description of the Related Art**

The category of laser scanning microscopes includes microscopes that utilize a confocal effect to scan in the optical axis direction within a specimen. In such cases, a confocal pinhole is often utilized in order to generate a confocal effect. Some microscopes, however, utilize a nonlinear optical effect to generate a confocal effect. Known microscopes utilizing a nonlinear optical effect include, for example, a multi-photon excitation fluorescent microscope, a second-harmonic-generation (SHG) microscope, a third-harmonic-generation (THG) microscope, a coherent anti-Stokes Raman scattering (CARS) microscope, and a sum frequency light generation microscope.

Utilizing a confocal effect detects only the light from the focal plane of an objective lens, enabling a scanning in the optical axis direction within a specimen. This scanning uses various methods such as a method of driving a specimen (i.e., a stage), that of driving an objective lens, that of changing the wave front curvatures of a light flux incident on an objective lens so as to change the focal plane without a need to move the objective lens or specimen (i.e., the stage).

The method of driving a specimen or an objective lens may sometimes allow vibration to affect the observation result. Further, the method needs to drive a relatively large component, thus making it difficult to perform a scan at high speed.

Meanwhile, the method of changing the focal plane by changing wave front curvatures makes it possible to make a drive part more compact. On the other hand, the changing of the focal plane allows the generating of a spherical aberration. Incidentally, the reason for the changing of the focal plane and thus allowing the generating of a spherical aberration is that an objective lens is designed to optimally correct an aberration when a parallel light flux is incident on the objective lens.

Techniques used as countermeasure to the spherical aberration due to the change of the focal plane include the following reference documents 1, 2, 3 and 4.

Document 1: Laid-Open Japanese Patent Application Publication No. H11-326860
Document 2: Laid-Open Japanese Patent Application Publication No. 2002-196246
Document 3: Laid-Open Japanese Patent Application Publication No. 2004-341394
Document 4: E. Botcherby, et al., Opt. Comm., Vol. 281, pp. 880-887 (2008)

The technique noted in document 1 uses a liquid crystal spatial light modulator to cause a focus position to scan in the optical axis direction, and at the same time cancels out any aberration generated in the event.

The technique noted in document 2 employs a wave front conversion element to scan a focal position in the optical axis direction. The range of scanning in the optical axis direction, however, is limited because the spherical aberration associated with a change in the focal position in the optical axis direction cannot be compensated.

The technique noted in document 3 uses a deformable mirror to cause a focal position to scan in the optical axis direction, and at the same time, to compensate for any aberration generated in the event.

The technique noted in document 4 satisfies the so-called Herschel condition, thereby compensating a spherical aberration associated with a change in the focal position in the optical axis direction of an objective lens by generating a spherical aberration in the reverse direction using another objective lens (i.e., a scan lens). This technique makes it possible to scan the focal position of an objective lens in the optical axis direction thereof and to compensate a spherical aberration associated with the aforementioned scan merely by moving, in the optical axis direction, a flat mirror placed at the focal position of the scan lens.

However, the technique noted in document 1 for example is faced with a difficulty in attaining a sufficiently high speed scan due to limitations in the response speed of a liquid crystal. Further, the technique noted in document 2 is faced with a limitation in securing a scan range in the optical axis direction. Further, the technique noted in document 3 is faced with a difficulty in implementing the method for controlling the deformable mirror.

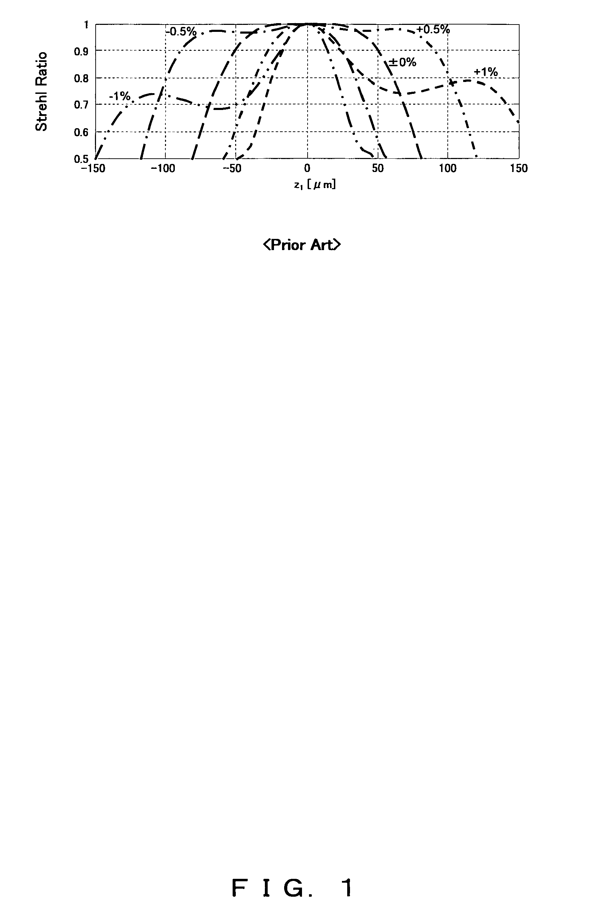

Even with the technique noted in reference document 4, it is difficult to flexibly respond to various objective lenses and specimens that possess different refractive indices. In the technique noted in reference document 4, an objective lens and scan lens are configured in such a manner as to satisfy the Herschel condition. The condition requires a very high level of precision in which even a 1% error causes the imaging characteristic of a laser spot that is scanned in the optical axis direction to be degraded. Fig. 1 is a graphic chart showing how the amount of movement in the focal point in the optical axis direction affects an aberration when the amount of shift from the Herschel condition is $\pm1\%$, +0.5% and 0% (i.e., when the refractive indices, pupil projection magnification ratios, or focal lengths are changed by these respective amounts). Here, the vertical axis represents a Strehl ratio, while the horizontal axis represents the amount of movement in the focal point in the optical axis direction as the parameter for an aberration. As shown here, even a $\pm0.5\%$ shift has a large influence on the amount of aberration. Moreover, a $\pm2\%$ magnification ratio error is allowed in the magnification ratio of an objective lens. Meanwhile, the distribution of refractive indices of some specimens exceeds 1%. Therefore, the required precision for the Herschel condition is very high.

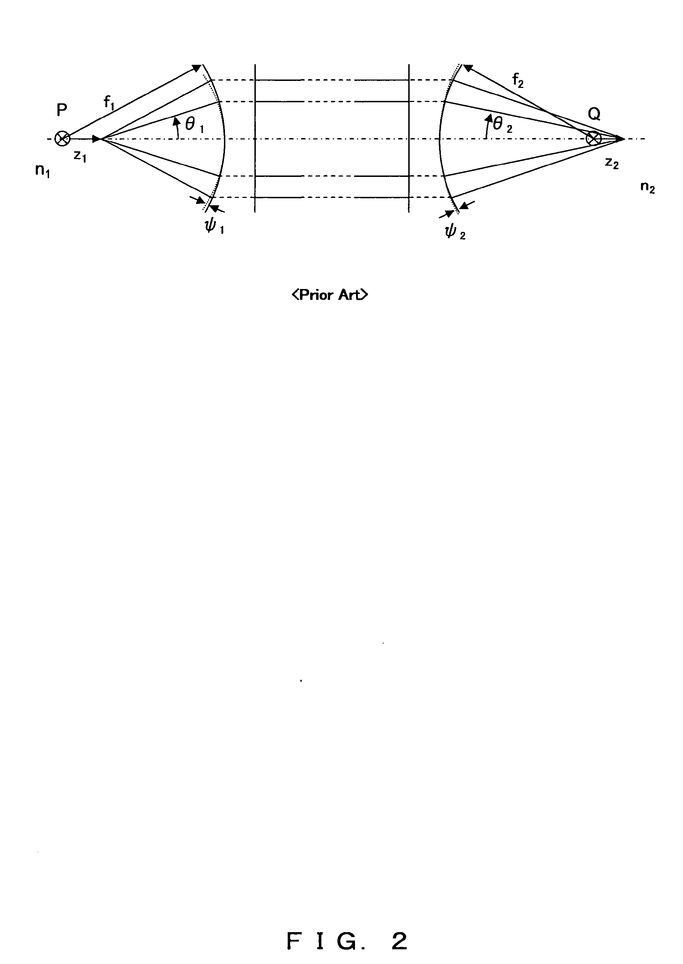

Note that the Herschel condition is a condition for a spherical aberration being corrected when points P and Q are in conjugate relation in respective optical systems having respective focal lengths of f1 and f2 as depicted in Fig. 2, and is thus given by the following conditional expression:

$$n_1 f_1 z_1 \sin^2 \frac{\theta_1}{2} = n_2 f_2 z_2 \sin^2 \frac{\theta_2}{2} \qquad \ldots (1),$$

where "$n_1$" and "$n_2$" represent the refractive indices of a medium between the point P and the optical system and between the point Q and the optical system, respectively; "$z_1$" and "$z_2$" represent the respective amounts of change when points P and Q are respectively shifted in the optical axis direction; and "$\theta_1$" and "$\theta_2$" represent respective angles formed by the optical axis and a light beam connecting the points generated by moving points P and Q the distances $z_1$ and $z_2$, respectively. In the above noted document 4, these two optical systems respectively use microscope-use objective lenses satisfying the sine condition (i.e., $n_1 f_1 \sin\theta_1 = n_2 f_2 \sin\theta_2$). In this case, satisfying the Herschel condition must satisfy the condition $n_1 f_1 = n_2 f_2$. This means that scan lenses with different focal length $f_2$ must be in correspondence with the combination of the refractive index $n_1$ of a specimen to be observed and the focal length $f_1$ of an objective lens.

**Summary of the Invention**

A laser scanning microscope according to an aspect of the present invention comprises: an objective lens for observing a specimen; a focal plane scan lens placed on the opposite side of the objective lens from the specimen and which generates an intermediate image; a mirror placed near to the position of the intermediate image of the focal plane scan lens; a scan unit scanning the mirror in the optical axis direction; and a pupil projection optical system which projects the pupil of the objective lens onto the pupil of the focal plane scan lens and of which the pupil projection magnification ratio is variable.

A laser scanning microscope according to another aspect of the present invention comprises: an objective lens for observing a specimen; a first optical system placed on the opposite side of the objective lens from the specimen and which generates an intermediate image; a second optical system placed opposite to the first optical system with the respective focal positions approximately matched; a scan unit for scanning the optically relative distance between the first optical system and second optical system in the optical axis direction; and a pupil projection optical system which projects the pupil of the objective lens onto the pupil of the first optical system and of which the pupil projection magnification ratio is variable.

A laser scanning microscope according to yet another aspect of the present invention comprises: an objective lens for observing a specimen; a focal plane scan lens placed on the opposite side of the objective lens from the specimen and which generates an intermediate image; a mirror placed near to the position of the intermediate image of the focal plane scan lens; a scan unit for scanning the mirror in the optical axis direction; and a pupil projection optical system which projects the pupil of the objective lens onto the pupil of the focal plane scan lens, wherein the focal plane scan lens includes a focal length adjustment mechanism.

A laser scanning microscope according to yet another aspect of the present invention comprises: an objective lens for observing a specimen; a first optical system placed on the opposite side of the objective lens from the specimen and which generates an intermediate image; a second optical system placed opposite to the first optical system with the respective focal positions approximately matched; a scan unit for scanning the optically relative distance between the first optical system and second optical system in the optical axis direction; and a pupil projection optical system which projects the pupil of an objective lens onto the pupil of the first optical system, wherein the first optical system includes a focal length adjustment mechanism.

**Brief Description of the Drawings**

The present invention will be more apparent from the following detailed description when the accompanying drawings are referred to.

Fig. 1 is a diagram showing the relationship between the amount of shift from a Herschel condition and the influence of an aberration due to an observation depth;

Fig. 2 is a diagram for describing a Herschel condition;

Fig. 3 is an outline diagram of a laser scanning microscope according to a preferred embodiment 1 of the present invention;

Fig. 4 is a diagram showing an exemplary configuration of a pupil projection optical system according to a preferred embodiment 1 of the present invention;

Fig. 5 is a diagram showing an exemplary configuration obtained by linking a pupil projection optical system with a scanning in the optical axis direction;

Fig. 6 is a diagram showing the relationship between the amount of shift from a Herschel condition and the influence of an aberration due to an observation depth;

Fig. 7 is a diagram showing an exemplary configuration obtained by linking the moving group of a focal plane scan lens with a scanning in the optical axis direction;

Fig. 8 is an outline diagram of a laser scanning microscope according to a preferred embodiment 2 of the present invention;

Fig. 9 is an outline diagram of a laser scanning microscope according to a preferred embodiment 3 of the present invention;

Fig. 10 is a diagram showing an exemplary configuration of first and second optical systems employed in embodiment 3;

Fig. 11 is a diagram showing another exemplary configuration of first and second optical systems employed in embodiment 3;

Fig. 12 is a diagram showing yet another exemplary configuration of first and second optical systems employed in embodiment 3;

Fig. 13 is a diagram showing yet another exemplary configuration of first and second optical systems employed in embodiment 3;

Fig. 14 is a diagram showing yet another exemplary configuration of first and second optical systems employed in embodiment 3; and

Fig. 15 is an outline diagram of a laser scanning microscope according to a preferred embodiment 4 of the present invention.

**Description of the Preferred Embodiments**

The following is a description of the preferred embodiments of the present invention with reference to the accompanying drawings.

<Embodiment 1>

The present embodiment is a configuration primarily aiming at being applied to a two-photon excitation fluorescent microscope. Approximately the same configuration is applicable to a microscope utilizing a nonlinear optical effect having another confocal effect.

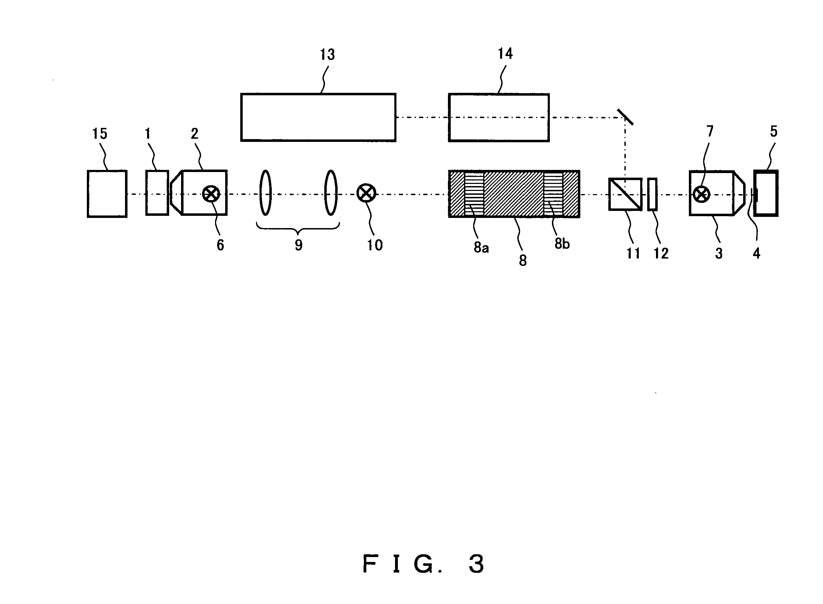

Fig. 3 is an outline diagram of a laser scanning microscope when the present invention is applied to a two-photon excitation fluorescent microscope. The laser scanning microscope according to the present embodiment comprises: an objective lens 2 for observing a specimen 1; a focal plane scan lens 3 placed on the opposite side of the objective lens 2 from the specimen 1 and which generates an intermediate image; a mirror 4 placed near to the position of an intermediate image of the focal plane scan lens 3; a piezo element 5 as a scan unit scanning the mirror 4 in the optical axis direction; and a pupil projection optical system 8 which projects the pupil 6 of the objective lens onto the pupil 7 of the focal plane scan lens 3 and of which the pupil projection magnification ratio is variable. Further, the pupil projection optical system 8 comprises a coarse movement unit 8a for changing the projection magnification ratio in a large way, and a fine movement unit 8b for finely changing the projection magnification ratio. The aforementioned configuration scans the mirror 4 in the optical axis direction, thereby making it possible to scan the focal position of the objective lens 2 in the optical axis direction. Furthermore, the pupil projection optical system 8 with a variable pupil projection magnification ratio makes it possible to correct a spherical aberration. That is, considering the case in which a pupil projection optical system with a pupil projection magnification ratio $\beta$ is sandwiched between the two optical systems in the configuration shown in Fig. 2, $f_1$ in the above described conditional expression (1) is to be replaced with $\beta f_1$. Therefore, adjusting the pupil projection magnification ratio $\beta$ so as to satisfy the expression $\beta n_1 f_1 = n_2 f_2$ actually satisfies the Herschel condition. Also when the objective lens is replaced, changing the pupil projection magnification ratios β of the pupil projection optical system 8 eliminates a need to exchange the focal plane scan lenses 3.

In particular, the configuration of the present embodiment uses a pupil relay optical system 9 to generate an intermediate image of the pupil in place of projecting the pupil 6 of the objective lens directly onto the pupil 7 of the focal plane scan lens. A scan unit, represented by a galvano mirror 10, is placed at the position of the intermediate image of the pupil. With this, the configuration of the present embodiment makes it possible to scan a plane perpendicular to the optical axis within a specimen.

Further, the configuration comprises a polarization beam splitter 11 and a quarter-wave plate 12, which are placed in the light path between the focal plane scan lens 3 and pupil projection optical system 8. The polarization beam splitter 11 directs the laser light emitted from a laser light source 13 in the direction of the focal plane scan lens 3. The laser light is a linearly polarized light and therefore, in the above described configuration, the laser light reflected by the polarization beam splitter 11 is converted by the quarter-wave plate 12 into a circularly polarized light. Then, the laser light is reflected by the mirror 4 and then guided through the quarter-wave plate 12 once again, and thereby it is converted from the circularly polarized light into a linearly polarized light.

The laser light in this event is a linearly polarized light in the orthogonal direction relative to the linearly polarized light when it was incident on the polarization beam splitter 11. Therefore, the laser light is allowed to transmit itself through the polarization beam splitter 11 instead of being reflected thereby. That is, the use of the polarization beam splitter 11 and the quarter-wave plate 12 as described above makes it possible to direct the laser light effectively into the light path.

Note that the present embodiment is premised on an application to a two-photon excitation fluorescent microscopy and accordingly uses a titanium sapphire laser for the laser light source 13. The laser light emitted from the laser light source 13 is a near-infrared pulse laser having a femto-second-class pulse width. In order to guide the laser light effectively to the specimen 1, the light path between the laser light source 13 and polarization beam splitter 11 is equipped with a laser guiding optical system 14. The laser guiding optical system 14 adjusts the beam diameter and the divergence of the laser light.

Further, the laser scanning microscope according to the present embodiment further comprises a transmission detector 15 placed on the opposite side of the specimen 1 from the objective lens 2 and which detects a light beam emitted from the specimen 1. The laser scanning microscope according to the present embodiment utilizes a confocal effect by virtue of a nonlinear optical effect and accordingly a commonly used confocal pinhole is not required. Therefore, the placing of the transmission detector 15 near to the specimen 1 makes it possible to effectively collect the fluorescent light emitted from the specimen 1.

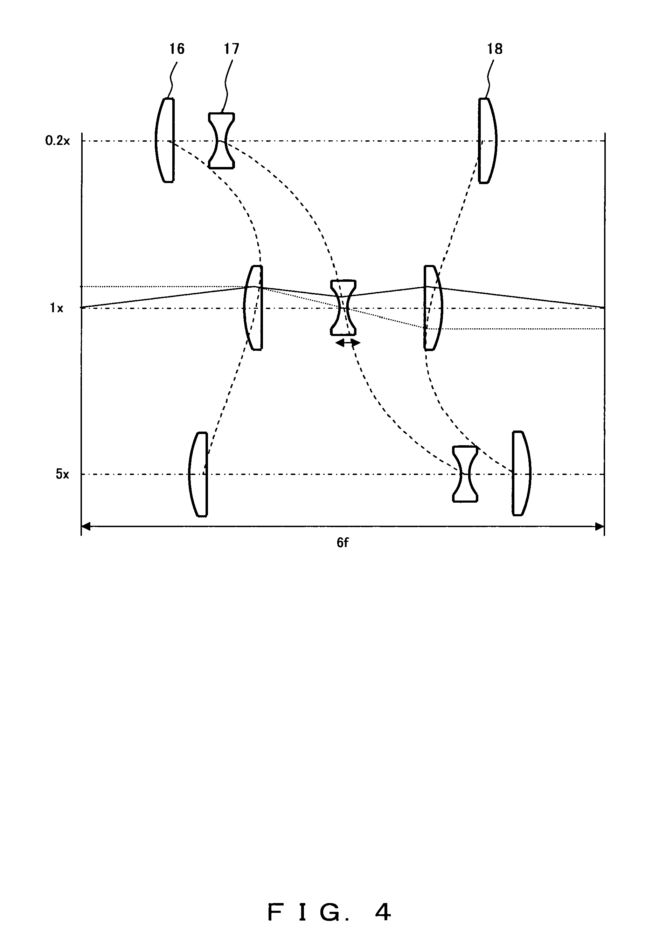

Fig. 4 is a diagram showing an exemplary optical configuration of the pupil projection optical system 8 with a variable pupil projection magnification ratio and an example of the magnification change in the configuration of the present embodiment. The pupil projection optical system 8 shown in Fig. 4 is configured as an afocal zoom lens. The afocal zoom lens is constituted by a three-lens group structure, i.e., convex lens 16, concave lens 17, and convex lens 18. The respective focal lengths of the convex lens 16, concave lens 17, and convex lens 18 are in the ratios of f, -f/2 and f, respectively. Further, the distance between the position of the pupil of the focal plane scan lens and the position of the galvano mirror 10 is 6f.

Note that the pupil projection optical system 8 with a variable pupil projection magnification ratio utilized for the present embodiment is not limited to the above described configuration constituted by single lenses. The pupil projection optical system 8 may employ a joined lens constituted by two or three lenses, or a group configuration obtained by combining a plurality of lenses.

The convex lens 16, concave lens 17 and convex lens 18, which are shown in Fig. 4, are moved along the loci indicated by dotted lines in Fig. 4 by mean of a zoom cam (i.e., a coarse movement unit 8a; shown in Fig. 3). With this operation, the pupil projection magnification ratio is changed from 0.2x (i.e., 0.2 times) to 5x. That is, the magnification change ratio of the afocal zoom lens of the present configuration is 25x. That is, a single focal plane scan lens is capable of responding to a wide range of focal lengths encompassing, for example, from a 10x objective lens to a 150x objective lens, and/or to the refractive indices of various specimens such as dry-, water-immersed-, and paraffin-fixed- specimens. In such a case, if the combination of the kinds of objective lenses is determined in advance of an observation, it is advisable to equip the zoom cam with click stops corresponding to the respective objective lenses.

Furthermore, equipping the second group concave lens 17 with a fine drive apparatus (i.e., a fine movement unit 8b), such as helicoids, for a fine movement in the optical axis direction is preferable for a magnification ratio adjustment in an approximate range of 1%. The afocal zoom lens according to the present configuration allows a magnification ratio of about 1% while the positional relation of a pupil projection is maintained, when the concave lens 17 is moved a distance of about 0.01f in the optical axis direction. Then, finely moving the second group concave lenses 17 makes it possible to respond to a minute difference in the refractive index that is different for each specimen. It is further possible to respond to a change in the refractive index of a specimen caused by a wavelength distribution when the excitation wavelength is changed.

That is, the pupil projection optical system configured as described above, comprising the coarse movement unit 8a used for changing the projection magnification ratios in a large way and a fine movement unit 8b used for minutely changing the projection magnification ratios, is preferable in driving while maintaining the Herschel condition and responding to a replacement of objective lenses and a difference in the refractive index of a specimen.

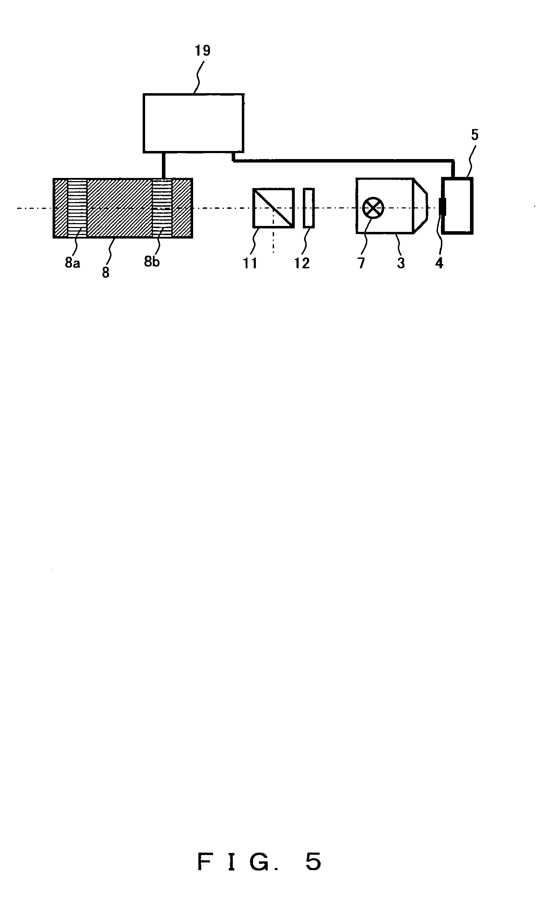

Fig. 5 is a diagram for describing a configuration that comprises a focus controller 19 linking the fine movement unit of the pupil projection optical system 8 with a scan unit scanning the mirror 4 in the optical axis direction, for the present embodiment. Fig. 5 shows a part of the laser scanning microscope shown in Fig. 3, with the focus controller 19 added. Accordingly, the same component signs as those shown in Fig. 3 are assigned, and a duplicate description is not provided here.

A laser spot (that is, the focal position of the objective lens 2) in the present embodiment is scanned in the optical axis direction by the piezo element 5 scanning the mirror 4 placed near to the focal position of the focal plane scan lens 3. In this event, it is preferable to change the projection magnification ratios of the pupil projection optical system 8 in accordance with the scan in the optical axis direction, for two reasons as described in the following.

A first reason is that a specimen possesses a refractive index distribution in many cases, changing the refractive index in terms of the observation depth. For example, human skin has a layer structure, with different refractive indices for individual layers. The refractive index changes greatly, i.e., to between 1.34 and 1.51.

A second reason is that a spherical aberration occurs in accordance with the observation depth. There is a so-called refractive index mismatch as a cause for the spherical aberration. This is a phenomenon in which the difference in refractive indices between a specimen and a cover glass and/or the difference in refractive indices between a cover glass and a liquid immersion medium (e.g., oil and water) generate different spherical aberrations depending on the observation depth. Consequently, shifting from the Herschel condition in accordance with the observation depth may sometimes provide a good imaging performance.

Next, let the description refer to Fig. 1 once again. When the shift amounts from the Herschel condition are 0%, the best Strehl ratio can be obtained at the position where the amount of movement in the focal point is "0". On the other hand, the degree of latitude against the movement amount in the focal point is large when the amount of shift is ±0.5%. That is, if an observation range is wide in the optical axis direction, an observation in a state shifted from the Herschel condition makes it possible to obtain a better overall observation result.

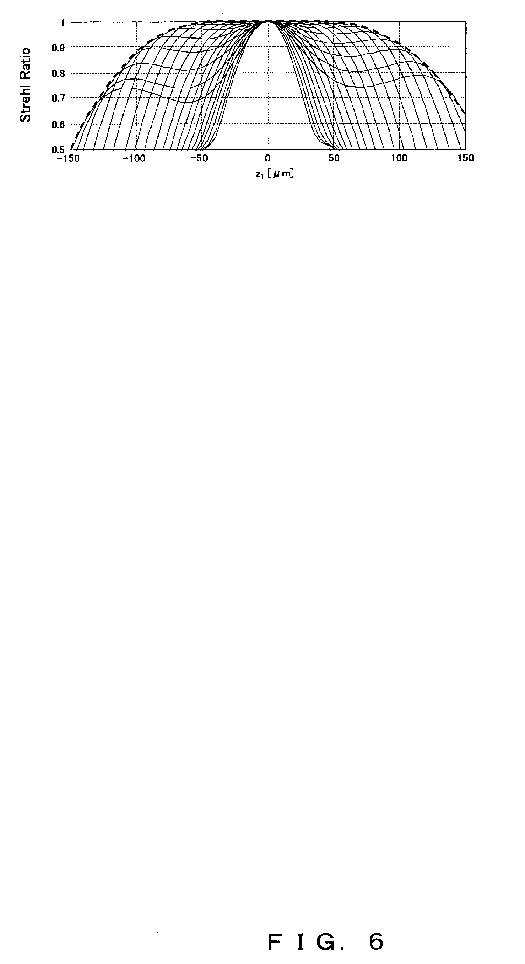

Fig. 6 is a diagram showing an envelope curve when the amount of shift from the Herschel condition shown in Fig. 1 is continuously changed. Fig. 6 is a graphic representation of the amount of shift from the Herschel condition in the range of ±1% by 0.1% increments (refer to the solid curves). The dotted line curve shown in Fig. 6 is the envelope curve in this event. When the amount of shift from the Herschel condition is continuously changed, the envelope curve represents degradation in the aberration in terms of the observation depth. That is, the amount of shift from the Herschel condition is continuously changed and a state in which the aberration is theoretically least degraded is maintained. As a result, it is possible to obtain a wider scanning range in the optical axis direction than in the conventional method.

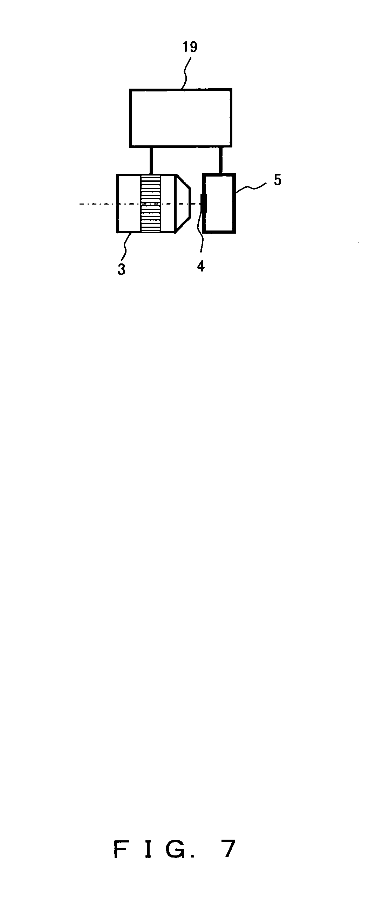

Fig. 7 is an outline diagram describing a configuration comprising a focus controller 19 that links a moving group (not shown in a drawing herein) changing the focal length of a focal plane scan lens 3 with a scan unit (a piezo element 5) scanning the mirror 4 placed near to the position of the intermediate image of the focal plane scan lens 3 in the optical axis direction, for the present embodiment. Fig. 7 also shows a part of the laser scanning microscope shown in Fig. 3, with the focus controller 19 added. Accordingly, the same component signs as those shown in Fig. 3 are assigned, and a duplicate description is not provided here.

A laser spot in the present embodiment is scanned in the optical axis direction by the piezo element 5 scanning the mirror 4 placed near to the focal position of the focal plane scan lens 3. In this event, an effect similar to that of the configuration shown in Fig. 5 can also be obtained by changing the focal length of the focal plane scan lens 3 in accordance with the scan in the optical axis direction. The reason is that the amount of shift from the Herschel condition has a similar influence if the shift is caused by a change in a pupil projection magnification ratio or is caused by a change in the focal length of the focal plane scan lens 3.

Also in this configuration, linking the moving group that changes the focal length of the focal plane scan lens 3 with the piezo element 5 used for scanning the mirror 4 placed near to the position of the intermediate image of the focal plane scan lens 3 maintains a state in which the aberration is theoretically least degraded, as described above with reference to Fig. 6. As a result, it is possible to obtain a wider scanning range in the optical axis direction than in the conventional method.

Incidentally, the configuration shown in Fig. 7 also enables a configuration that does not make the pupil projection magnification ratio of the pupil projection optical system 8 variable. Configuring the moving group, which changes the focal length of the focal plane scan lens 3, to make it possible to change focal length in a large way, it is possible to maintain the Herschel condition by changing the focal length of the focal plane scan lens 3 instead of making the pupil projection magnification ratio of the pupil projection optical system 8 variable.

That is, in the configuration shown in Fig. 7, a laser scanning microscope comprises: an objective lens 2 for observing a specimen 1; a focal plane scan lens 3 placed on the opposite side of the objective lens 2 from the specimen 1 and which generates an intermediate image; a mirror 4 placed near to the position of the intermediate image of the focal plane scan lens 3; a scan unit for scanning the mirror 4 in the optical axis direction; and a pupil projection optical system 8 which projects the pupil 6 of the objective lens onto the pupil 7 of the focal plane scan lens. In addition to the aforementioned configuration, the focal plane scan lens 3 further comprises a focal length adjustment mechanism, thereby making it possible to solve the problem levied on the present invention as the configuration shown in Fig. 5 does.

In this case, a focal plane scan lens 3 comprising a focal length adjustment mechanism can employ an objective lens with a zoom mechanism, that is, a so called a zoom objective lens.

<Embodiment 2>

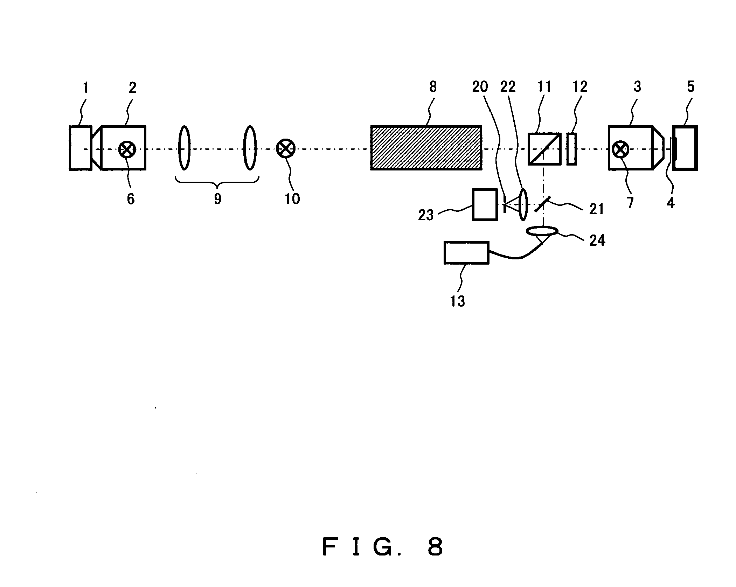

Fig. 8 is an outline diagram of a laser scanning microscope in the case of applying the present invention to a single-photon excitation laser scanning fluorescent microscope. The laser scanning microscope according to the present embodiment comprises: an objective lens 2 for observing a specimen 1; a focal plane scan lens 3 placed on the opposite side of the objective lens 2 from the specimen 1 and which generates an intermediate image; a mirror 4 placed near to the position of an intermediate image formed by the focal plane scan lens 3; a piezo element 5 as a scan unit for scanning the mirror 4 in the optical axis direction; and a pupil projection optical system 8 which projects the pupil 6 of the objective lens onto the pupil 7 of the focal plane scan lens and of which the pupil projection magnification ratio is variable. The aforementioned configuration scans the mirror 4 in the optical axis direction, thereby making it possible to scan the focal position of the objective lens 2 in the optical axis direction. Furthermore, the use of the pupil projection optical system 8 with a variable pupil projection magnification ratio makes it possible to correct a spherical aberration. Also, even when the objective lenses 2 are exchanged, the focal plane scan lens 3 does not need to be changed as a result of changing the pupil projection magnification ratios of the pupil projection optical system 8.

In particular, the present embodiment is configured to use a pupil relay optical system 9 to generate an intermediate image of a pupil in place of projecting the pupil 6 of an objective lens directly onto the pupil 7 of a focal plane scan lens. At the position of the intermediate image of the pupil, a scan unit represented by a galvano mirror 10 is placed. This configuration makes it possible to scan a plane perpendicular to the optical axis within a specimen.

Furthermore, a polarization beam splitter 11 and a quarter-wave plate 12 are equipped in the light path between the focal plane scan lens 3 and pupil projection optical system 8. The polarization beam splitter 11 directs, in the direction of the focal plane scan lens 3, the laser light emitted from a laser light source 13.

The present embodiment is premised on being used for a single-photon excitation fluorescent microscopy, and therefore a confocal effect is obtained by making a confocal pinhole 20. Accordingly, the present embodiment is configured to place in the light path between the polarization beam splitter 11 and laser light source 13 a dichroic mirror 21 used for separating a fluorescence detection light path from the laser guiding light path, and, further, to place a confocal pinhole 20 in the fluorescence detection light path. This configuration requires the confocal pinhole 20 to be placed at a position that is conjugate with the focal point of the objective lens 2. Accordingly, a confocal lens 22 is placed between the dichroic mirror 21 and confocal pinhole 20. The fluorescent light transmitted through the confocal pinhole 20 is detected by a confocal point detector 23.

Note that the laser light emitted from the laser light source 13 used in the present embodiment is introduced from the outside of the microscope body and scan unit by way of a single mode optical fiber and is inverted by a collimator lens 24 into a parallel light.

Also, the present embodiment can employ the afocal zoom lens shown in Fig. 4 for the pupil projection optical system 8 with a variable pupil projection magnification ratio. Further, the present embodiment can also utilize the configuration comprising the focus controller 19, which is shown in Fig. 5 and which links the fine movement unit of the pupil projection optical system 8 with a scan unit scanning the mirror in the optical axis direction. Furthermore, the present embodiment can utilize the configuration comprising the focus controller, which is shown in Fig. 7 and which links the moving group used for changing the focal length of a focal plane scan lens with the scan unit used for scanning the mirror placed near to the position of the intermediate image of the focal plane scan lens. The details and effects of these configurations in the present embodiment are the same as described above and therefore a duplicate description is not provided here.

<Embodiment 3>

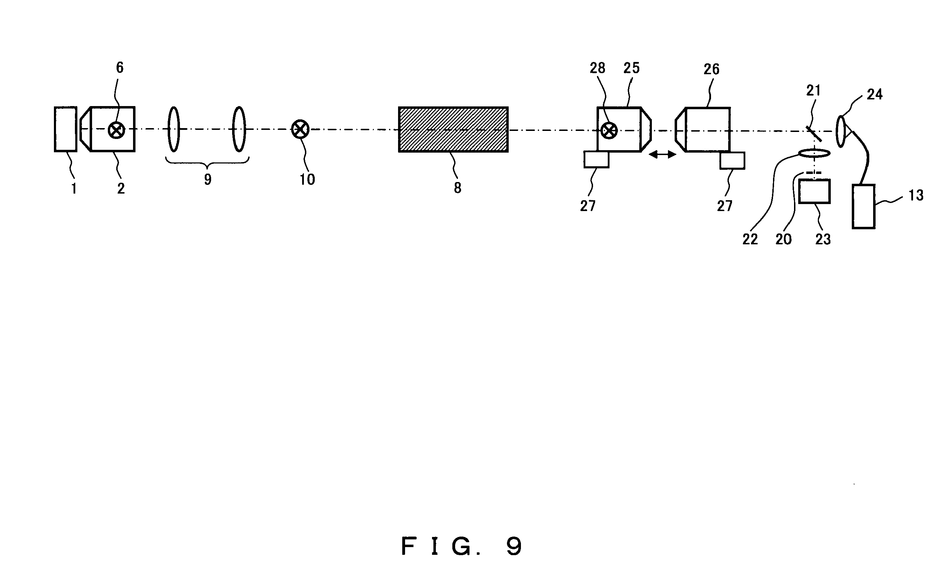

Fig. 9 is an outline diagram of the configuration of a laser scanning microscope when the present invention is applied to a single-photon excitation fluorescent microscope. The laser scanning microscope according to the present embodiment comprises: an objective lens 2 for observing a specimen 1; a first optical system 25 placed on the opposite side of the objective lens 2 from the specimen 1 and which generates an intermediate image; a second optical system 26 placed opposite to the first optical system 25 with the respective focal positions approximately matched; a scan unit 27 for scanning the optically relative distance between the first optical system 25 and second optical system 26 in the optical axis direction; and a pupil projection optical system 8 which projects the pupil 6 of the objective lens onto the pupil 28 of the first optical system and of which the pupil projection magnification ratio is variable. Here, a piezo stage can be used as the scan unit 27 for scanning the optically relative distance between the first optical system 25 and second optical system 26. The piezo stage can be used for both or either of the first optical system 25 and second optical system 26. The aforementioned configuration scans the optically relative distance between the first optical system 25 and second optical system 26 in the optical axis direction, thereby making it possible to scan the focal position of the objective lens 2 in the optical axis direction. Furthermore, a spherical aberration can be corrected by the pupil projection optical system 8 with a variable pupil projection magnification ratio. Further, changing the pupil projection magnification ratio of the pupil projection optical system 8 eliminates a need to replace the first optical system 25 and second optical system 26 even when the objective lens 2 is replaced.

Further, the present embodiment comprises a dichroic mirror 21 for separating a light beam emitted from the specimen 1 from the laser light irradiated on the specimen 1, with the dichroic mirror 21 placed on the opposite side of the second optical system 26 from the first optical system 25. This configuration allows not only the laser light that is an excitation light but also the fluorescent light to pass through the first optical system 25 and second optical system 26, and therefore, scanning the optically relative distance between the first optical system 25 and second optical system 26 in the optical axis direction causes the detected fluorescent light to be scanned in the optical axis direction.

The present embodiment is premised on use for the single-photon excitation fluorescent microscopy, and therefore the creation of the confocal pinhole 20 obtains a confocal effect. The present embodiment is accordingly configured to place the confocal pinhole 20 in the detection light path that is separated by the dichroic mirror 21. The confocal pinhole 20 is required to be placed at a point that is conjugate with the focal point of the objective lens 2. Therefore, a confocal lens 22 is placed between the dichroic mirror 21 and confocal pinhole 20. The fluorescent light transmitted through the confocal pinhole 20 is detected by a confocal point detector 23.

Note that the light emitted from the laser light source 13 comprised in the present embodiment is introduced from the outside of the microscope body and scan unit by way of a single mode optical fiber and is converted into a parallel light by a collimator lens 24.

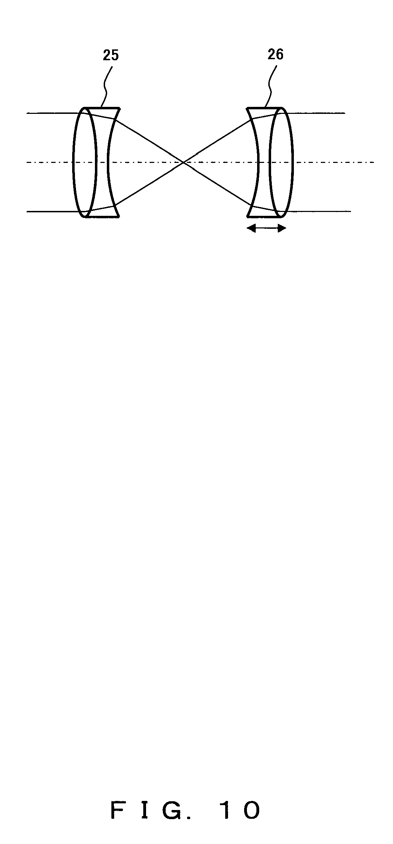

Fig. 10 is a diagram showing an exemplary configuration of a first optical system 25 and a second optical system 26, both of which are employed in the comprisal of the present embodiment. The first optical system 25 and second optical system 26 shown in Fig. 10 are each either a cemented lens or a lens group including a cemented lens (es), and the two systems are placed opposite to each other with the respective focal positions of both approximately matched. Further, the configuration is such that driving the lens of the second optical system 26 in the optical axis direction scans the optically relative distance between the first optical system 25 and second optical system 26 in the optical axis direction. Note that the first optical system 25 is required to satisfy the sine condition. The second optical system 26 is not required as such and therefore a minimum-size configuration can be devised in consideration of driving the second optical system 26.

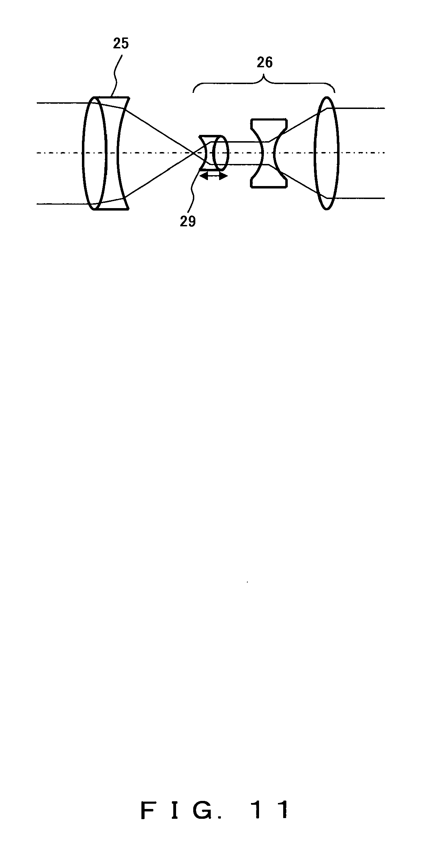

Fig. 11 is a diagram showing another exemplary configuration of a first optical system 25 and a second optical system 26, both of which are employed in the comprisal of the present embodiment. The second optical system 26 shown in Fig. 11 is an optical system in a 3 lens-group structure. Driving a moving group 29 in the optical axis direction makes it possible to change the focal position of the second optical system 26. That is, the configuration is such that the driving of the moving group 29 in the optical axis direction scans the optically relative distance between the first optical system 25 and second optical system 26 in the optical axis direction. Note that the first optical system 25 comprised in the present configuration advisably uses a positive lens appropriately designed to satisfy the sine condition.

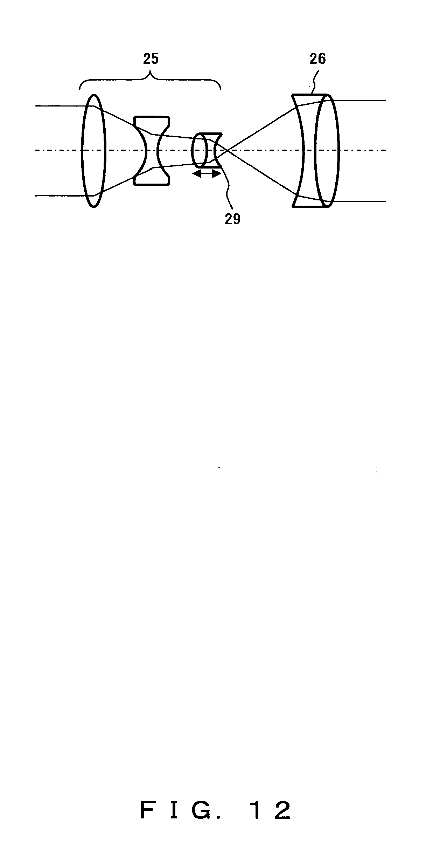

Fig. 12 is a diagram showing yet another exemplary configuration of a first optical system 25 and a second optical system 26, both of which are employed in the comprisal of the present embodiment. The first optical system 25 shown in Fig. 12 is an optical system in a 3 lens-group structure. Driving a moving group 29 in the optical axis direction makes it possible to change the focal position of the first optical system 25. That is, the configuration is such that the driving of the moving group 29 in the optical axis direction scans the optically relative distance between the first optical system 25 and second optical system 26 in the optical axis direction. Simultaneously with above operation, a spherical aberration is corrected by changing the focal position of the first optical system 25. Note that the second optical system 26 comprised in the present configuration is not necessarily required to meet the sine condition, and may use a positive lens appropriately designed for condensing light.

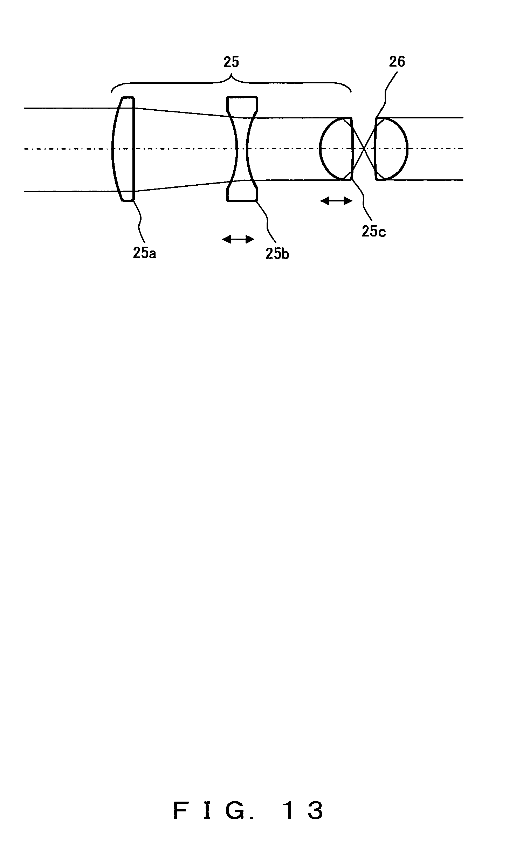

Fig. 13 is a diagram showing yet another exemplary configuration of a first optical system 25 and a second optical system 26, both of which are employed in the comprisal of the present embodiment. The first optical system 25 shown in Fig. 13 is an optical system in a 3 lens-group structure. The first group 25a possesses a positive refractive power, the second group 25b possesses a negative refractive power, and the third group 25c possesses a positive refractive power. Further, the second optical system 26 possesses a positive refractive power. The first group 25a and second group 25b are combined together to constitute an approximately afocal optical system. Both the third group 25c and second optical system 26 are aspheric lenses and placed opposite to each other with the respective focal positions approximately matched. Further, the third group 25c and second optical system 26 are also combined together to constitute an approximately afocal optical system. Note that it is effective to use an aspheric lens for both or either of the first group 25a and second group 25b in order to satisfy the sine condition of the first optical system.

In the configuration shown in Fig. 13, the third group 25c is comprised so as to allow a piezo stage (not shown in a drawing herein) to drive it in the optical axis direction. That is, driving the third group 25c in the optical axis direction scans the optically relative distance between the first optical system 25 and second optical system 26 in the optical axis direction. In this event, the driving of the third group 25c in the optical axis direction does not change the synthesized focal length of the first optical system 25 because the combination between the first group 25a and second group 25b and the combination between the third group 25c and second optical system 26 constitute an afocal optical system.

Furthermore, in the configuration shown in Fig. 13, the second group 25b comprises a fine movement apparatus such as helicoids (not shown in a drawing herein). If the second group 25b is driven in the optical axis direction, the afocal optical combination between the first group 25a and second group 25b is broken. If the third group 25c is driven in the optical axis direction in this event, the synthesized focal length of the first optical system 25 is changed. This operation makes it possible to scan the focal position of an objective lens in the optical direction and to simultaneously change the amount of a generated spherical aberration. That is, adjusting the position of the second group 25b, a spherical aberration generated by scanning the focal position of the objective lens in the optical axis direction can be suppressed in a wide scanning range.

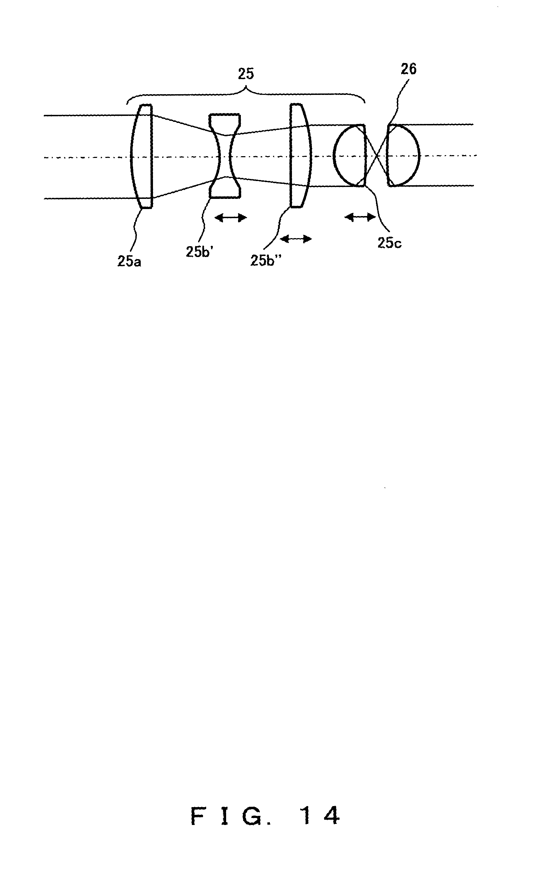

Fig. 14 is a diagram showing yet another exemplary configuration of a first optical system 25 and a second optical system 26, both of which are employed in the comprisal of the present embodiment. The first optical system 25 shown in Fig. 14 is an optical system in a 4 lens-group structure. The first group 25a possesses a positive refractive power, the second group 25b' possesses a negative refractive power, the third group 25b" possesses a positive refractive power, and the fourth group 25c possesses a positive refractive power. Further, the second optical system 26 possesses a positive refractive power. The first group 25a, second group 25b' and third group 25b" are combined to constitute an approximately afocal optical system. The fourth group 25c and second optical system 26 are both aspheric lens and are placed opposite to each other with their respective focal positions approximately matched. That is, the configuration shown in Fig. 14 can be regarded as a configuration obtained by dividing the second group 25b of the optical system shown in Fig. 13 into the second group 25b' and third group 25b".

Also, in the configuration shown in Fig. 14, driving the fourth group 25c in the optical axis direction with the third group 25b" finely adjusted to an appropriate position scans the focal position of an objective lens in the optical axis direction and simultaneously suppresses a spherical aberration. As a result, a good observation is enabled in a wide scanning range.

Incidentally, if attention is paid to the first group 25a, second group 25b' and third group 25b" in the first optical system 25 comprised in the present configuration shown in Fig. 14, they will be comprehensibly configured in a similar manner to the afocal zoom optical system shown in Fig. 4. That is, the first optical system of the present configuration can also have the function of the pupil projection optical system 8 with a variable pupil projection magnification ratio. Based on the consideration as described above, the laser scanning microscope of the present configuration comprises: an objective lens 2 for observing a specimen 1; a first optical system 25, placed on the opposite side of the objective lens 2 from the specimen 1 and which generates an intermediate image; a second optical system 26 placed opposite to the first optical system 25 with the respective focal positions approximately matched; a scan unit 27 for scanning the optically relative distance between the first optical system 25 and second optical system 26; and a pupil projection optical system 8 which projects the pupil 6 of an objective lens onto the pupil 28 of the first optical system 25. In this case, the focal length adjustment mechanism may be equipped on the first optical system 25.

Note that the present embodiment is described on the basis of defining the first optical system 25 and second optical system 26 as being different optical systems that are separated at the intermediate image position, which provides the border; it is possible to regard the first optical system 25 and second optical system 26 as one optical system.

<Embodiment 4>

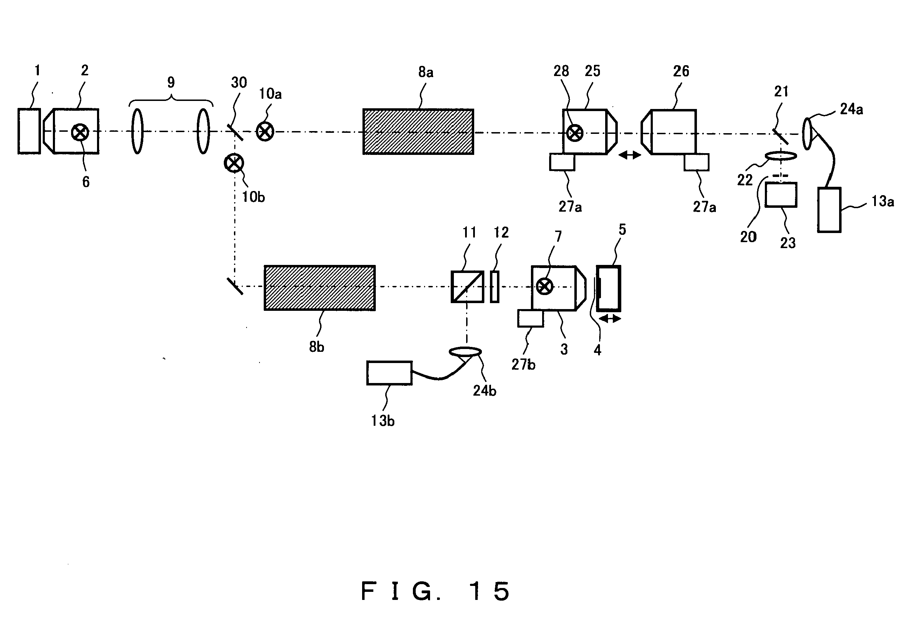

Fig. 15 is a diagram for describing an embodiment when the present invention is applied to both an observation-use light path and a stimulus-use light path.

Modern laser scanning microscopes in many cases comprise an observation-use laser and a stimulus-use laser independently. The present embodiment is the case of applying the present invention to such a laser scanning microscope.

The configuration of the laser scanning microscope according to the present embodiment is close to a combination between the above described embodiments 1 and 3. That is, the laser scanning microscope according to the present embodiment comprises: an objective lens 2 for observing a specimen 1; a first optical system 25 placed on the opposite side of the objective lens 2 from the specimen 1 and which generates an intermediate image; a second optical system 26 placed opposite to the first optical system 25 with the respective focal positions approximately matched; a scan unit 27a for scanning the optically relative distance between the first optical system 25 and second optical system 26 in the optical axis direction; and a pupil projection optical system 8a which projects the pupil 6 of the objective lens onto the pupil 28 of the first optical system and of which the pupil projection magnification ratio is variable. The laser scanning microscope according to the present embodiment further comprises: a focal plane scan lens 3 placed on the opposite side of the objective lens 2 from the specimen 1 and which generates an intermediate image; a mirror 4 placed near to the position of an intermediate image of the focal plane scan lens 3; a scan unit 27b for scanning the focal plane scan lens 3 in the optical axis direction; and a pupil projection optical system 8b which projects the pupil 6 of the objective lens onto the pupil 7 of the focal plane scan lens and of which the pupil projection magnification ratio is variable.

Furthermore, a pupil relay optical system 9, a beam splitter 30, and an observation-use galvano mirror 10a are placed in the light path from the objective lens 2 to the pupil projection optical system 8a. The pupil relay optical system 9 relays the pupil 6 of the objective lens to the observation-use galvano mirror 10a. Meanwhile, the pupil relay optical system 9, the beam splitter 30 and a stimulus-use galvano mirror 10b are placed in the light path from the objective lens 2 to the pupil projection optical system 8b. The pupil relay optical system 9 also relays the pupil 6 of the objective lens to the stimulus-use galvano mirror 10b. That is, the observation-use light path and stimulus-use light path in the present embodiment are separated by the beam splitter 30.

The observation-use light path included in the present embodiment is further equipped with a dichroic mirror 21 for separating a light beam emitted from a specimen 1 from the laser light irradiated thereon on the opposite side of the second optical system 26 from the first optical system 25 . Meanwhile, in the present embodiment, the detection light path on the observation-use light path side is equipped with a confocal lens 22 for condensing a light beam emitted from the specimen 1 and which is separated by the dichroic mirror 21, with a confocal pinhole 20 placed at the condensing position of the confocal lens 22 and with a confocal detector 23 for detecting the light beam transmitted through the confocal pinhole 20. Then, the detection result of the confocal detector 23 is converted into the image.

The stimulus-use light path included in the present embodiment, specifically in the light path between the focal plane scan lens 3 and pupil projection optical system 8b, is further equipped with a polarization beam splitter 11 and a quarter-wave plate 12. The polarization beam splitter 11 directs a laser light in the direction of the focal plane scan lens 3 of the stimulus-use light path.

The present configuration enables optimal corrections for aberrations suitable to the respective depths when a stimulus-use laser and an observation-use laser are irradiated onto different depths within a specimen.

## Claims

1.   A laser scanning microscope, comprising:

   an objective lens (2) for observing a specimen(1);
   a focal plane scan lens(3) placed on an opposite side of the objective lens (2) from the specimen (1) and which generates an intermediate image;
   a mirror (4) placed near to a position of the intermediate image of the focal plane scan lens(3);
   a scan unit(5) scanning the mirror(4) in an optical axis direction; and
   a pupil projection optical system(8) which projects a pupil(6) of the objective lens(2) onto a pupil(7) of the focal plane scan lens(3) and of which a pupil projection magnification ratio is variable.

2.   The laser scanning microscope according to claim 1, further comprising
   a polarization beam splitter(11) and a quarter-wave plate(12), both of which are placed in a light path between the focal plane scan lens (3) and pupil projection optical system(8), wherein
   the polarization beam splitter(11) directs a laser light in a direction of the focal plane scan lens(3) of the light path.

3.   The laser scanning microscope according to claim 1, further comprising
   a transmission detector (15) placed on an opposite side of the specimen (1) from the objective lens (2) and which detects a light beam emitted from the specimen (1) .

4.   The laser scanning microscope according to claim 1, wherein
   the pupil projection optical system(8) comprises
   a coarse movement unit(8a) for changing the projection magnification ratio in a large way, and
   a fine movement unit (8b) for finely changing the projection magnification ratio.

5.   The laser scanning microscope according to claim 4, further comprising
   a focus controller(19) for linking the fine movement unit(8b) with the scan unit(5).

6.   The laser scanning microscope according to claim 1, wherein

the focal plane scan lens(3) includes a moving group for changing a focal length.

7. The laser scanning microscope according to claim 6, further comprising
a focus controller(19) for linking the moving group with the scan unit(5).

8. A laser scanning microscope, comprising:

an objective lens (2) for observing a specimen (1);
a first optical system(25) placed on an opposite side of the objective lens(2) from the specimen (1) and which generates an intermediate image;
a second optical system (26) placed opposite to the first optical system(25) with respective focal positions approximately matched;
a scan unit (27) for scanning an optically relative distance between the first optical system (25) and second optical system(26) in an optical axis direction; and
a pupil projection optical system(8) which projects a pupil(6) of the objective lens(2) onto a pupil(28) of the first optical system(25) and of which a pupil projection magnification ratio is variable.

9. The laser scanning microscope according to claim 8, further comprising
a dichroic mirror (21) placed on an opposite side of the second optical system(26) from the first optical system (25) and which separates a light beam emitted from the specimen (1) from a laser light irradiated thereon.

10. The laser scanning microscope according to claim 9, further comprising:

a confocal lens (22) placed on an opposite side of the second optical system(26) from the first optical system (25) and which condenses a light beam emitted from the specimen(1), the light beam having been separated by the dichroic mirror(21);
a confocal pinhole(20) placed at a condensing position of the confocal lens(22); and
a detector(23) for detecting a light beam transmitted through the confocal pinhole(20).

11. The laser scanning microscope according to claim 8, wherein
the pupil projection optical system(8) comprises
a coarse movement unit(8a) for changing the projection magnification ratio in a large way,
and a fine movement unit (8b) for finely changing the projection magnification ratio.

12. The laser scanning microscope according to claim 11, further comprising
a focus controller(19) for linking the fine movement unit(8b) with the scan unit(27).

13. The laser scanning microscope according to claim 8, wherein
the first optical system(25) includes a moving group (25b,25b',25b",25c,29) for changing a focal length.

14. The laser scanning microscope according to claim 13, further comprising
a focus controller(19) for linking the moving group(25b,25b',25b",25c,29) with the scan unit(27).

15. A laser scanning microscope, comprising:

an objective lens (2) for observing a specimen(1);
a focal plane scan lens(3) placed on an opposite side of the objective lens (2) from the specimen(1) and which generates an intermediate image;
a mirror (4) placed near to a position of the intermediate image of the focal plane scan lens(3);
a scan unit(5) for scanning the mirror(4) in an optical axis direction; and
a pupil projection optical system(8) which projects a pupil(6) of the objective lens(2) onto a pupil(7) of the focal plane scan lens(3), wherein
the focal plane scan lens(3) includes a focal length adjustment mechanism.

16. The laser scanning microscope according to claim 15, further comprising
a focus controller(19) for linking the focal length adjustment mechanism with the scan unit(5).

17. A laser scanning microscope, comprising:

an objective lens (2) for observing a specimen(1);

a first optical system(25) placed on an opposite side of the objective lens(2) from the specimen(1) and which generates an intermediate image;

a second optical system (26) placed opposite to the first optical system(25) with respective focal positions approximately matched;

a scan unit (27) for scanning an optically relative distance between the first optical system (25) and second optical system(26) in an optical axis direction; and

a pupil projection optical system(8) which projects a pupil(6) of an objective lens(2) onto a pupil(7) of the first optical system(25), wherein

the first optical system(25) includes a focal length adjustment mechanism.

**18.** The laser scanning microscope according to claim 17, further comprising

a dichroic mirror (21) placed on an opposite side of the second optical system(26) from the first optical system (25) and which separates a light beam emitted from the specimen(1) from a laser light irradiated thereon.

**19.** The laser scanning microscope according to claim 18, further comprising

a confocal lens (22) placed on an opposite side of the second optical system(26) from the first optical system (25) and which condenses a light beam emitted from the specimen(1), the light beam separated by the dichroic mirror (21);

a confocal pinhole(20) placed at a condensing position of the confocal lens(22); and

a detector(23) for detecting a light beam transmitted through the confocal pinhole(20).

<Prior Art>

F I G. 1

<Prior Art>

F I G.  2

F I G. 3

EP 2 146 235 A1

F I G. 4

16

F I G. 5

F I G. 6

F I G. 7

EP 2 146 235 A1

F I G. 8

EP 2 146 235 A1

F I G.  9

25    26

FIG. 10

F I G. 1 1

FIG. 12

FIG. 13

25

26

25a   25b'   25b"   25c

F I G.   1 4

F I G. 15

EP 2 146 235 A1

| | Europäisches Patentamt European Patent Office Office européen des brevets | **EUROPEAN SEARCH REPORT** | **Application Number** EP 09 00 7622 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/046936 A1 (DIXON ARTHUR E [CA] ET AL DIXON ARTHUR E [CA] ET AL) 3 March 2005 (2005-03-03) | 8-14, 17-19 | INV. G02B21/00 |
| A | * paragraphs [0025] - [0027]; figure 2a * ----- | 1-7,15, 16 | |
| A | EP 0 627 643 A (HAMAMATSU PHOTONICS KK [JP]) 7 December 1994 (1994-12-07) * column 10, line 31 - column 13, line 55 * ----- | 1-19 | |
| A | US 2006/007534 A1 (FUKUYAMA HIROYA [JP] ET AL) 12 January 2006 (2006-01-12) * paragraphs [0074] - [0202]; figure 1 * ----- | 1-19 | |
| A | EP 1 253 457 A (ZEISS CARL JENA GMBH [DE]) 30 October 2002 (2002-10-30) * paragraphs [0022] - [0034] * ----- | 1-19 | |
| A | US 2002/048025 A1 (TAKAOKA HIDEYUKI [JP]) 25 April 2002 (2002-04-25) * paragraphs [0114] - [0121]; figure 5 * ----- | 1-19 | TECHNICAL FIELDS SEARCHED (IPC) G02B |

The present search report has been drawn up for all claims

| Place of search | Date of completion of the search | Examiner |
|---|---|---|
| Munich | 15 September 2009 | Stemmer, Michael |

EPO FORM 1503 03.82 (P04C01)

## ANNEX TO THE EUROPEAN SEARCH REPORT
## ON EUROPEAN PATENT APPLICATION NO.

EP 09 00 7622

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2009

| Patent document cited in search report | | Publication date | Patent family member(s) | | Publication date |
|---|---|---|---|---|---|
| US 2005046936 | A1 | 03-03-2005 | NONE | | |
| EP 0627643 | A | 07-12-1994 | DE | 69418248 D1 | 10-06-1999 |
| | | | DE | 69418248 T2 | 14-10-1999 |
| US 2006007534 | A1 | 12-01-2006 | NONE | | |
| EP 1253457 | A | 30-10-2002 | NONE | | |
| US 2002048025 | A1 | 25-04-2002 | JP | 2002174769 A | 21-06-2002 |

EPO FORM P0459

## REFERENCES CITED IN THE DESCRIPTION

**Patent documents cited in the description**

- JP H11326860 B
- JP 2002196246 A

- JP 2004341394 A

**Non-patent literature cited in the description**

- **E. Botcherby et al.** *Opt. Comm.,* 2008, vol. 281, 880-887